# EUROPEAN PATENT SPECIFICATION

(11) **EP 4 058 217 B1**
(45) Date of publication and mention of the grant of the patent: **25.11.2026**
(21) Application number: 20888612.7
(22) Date of filing: 29.10.2020
(51) Int. Cl.: B08B 15/00, A47L 5/00, A47L 5/22, A47L 9/28, F24F 11/00, F24F 11/46, F24F 11/72, F24F 11/77

(54) **IMPROVED DUST EXTRACTOR MOTOR CONTROL**
VERBESSERTE MOTORSTEUERUNG EINER STAUBABSAUGUNG
COMMANDE AMÉLIORÉE DE MOTEUR DE DÉPOUSSIÉREUR

(30) Priority: 14.11.2019 SE 1951311
(43) Date of publication of application: 21.09.2022
(73) Proprietor: HUSQVARNA AB, 561 82 Huskvarna (SE)
(72) Inventor: ERIKSSON, Jonas, 741 45 Knivsta (SE); ELMESTRAND, Karl, 433 62 Sävedalen (SE)
(86) International application number: PCT/SE2020/051053
(87) International publication number: WO 2021/096409

(56) References cited:
- EP-A1- 0 423 670
- EP-A2- 0 362 894
- CN-A- 1 050 982
- CN-A- 103 463 920
- DE-A1- 2 032 476
- JP-A- 2013 022 359
- JP-A- H03 228 725
- US-A1- 2007 136 980
- US-A1- 2013 019 901
- US-A1- 2014 283 329
- US-A1- 2018 093 215

## Description

### TECHNICAL FIELD

The present disclosure relates to heavy duty dust extraction devices for use with construction equipment. There are disclosed methods and control units for controlling a fan motor comprised in the dust extraction device.

### BACKGROUND

Dust and slurry are created by cutting, drilling, grinding and/or demolishing concrete, brick and other hard construction materials. The dust and slurry may be collected by a dust extractor and removed from the construction site in a controlled manner. Dust extractors are vacuum devices which collect the dust and slurry by generating an under-pressure by means of a fan or impeller and motor arrangement, i.e., similar to a vacuum cleaner. Some dust extractors comprise a pre-filter or separator followed by a filter such as a high-efficiency particulate air (HEPA) filter.

Dust extractors often comprise electrical motors powered from an electrical power source and are therefore limited by the capacity of the power source. It is desired to minimize the energy and peak power drawn from the source in order to not overload the source. For instance, some dust extractors draw high power during start-up, which may be a problem at construction sites with fuse limitations on the main power grid.

Dust extractors often use filter arrangements in order to collect and hold the finer dust particles from the particle-laden air flow. These filters need to be cleaned and/or replaced regularly. Filter replacement drives operational costs since operation usually needs to be paused during filter servicing. It is desired to extend the filter replacement intervals.

US 2013/019901 A1 describes a vacuum cleaner for domestic use. The vacuum cleaner is arranged to detect an air volume flow and a negative pressure and to determine the value of an operand which is a function of the airflow and of the negative pressure. The vacuum cleaner is arranged to detect a non-use condition of the vacuum cleaner based on the operand and to lower an electrical power input to a fan motor in response to detecting the non-use condition.

US 2018/093215 A1 discloses a control system for an industrial dust extractor, the control system is arranged to detect a plurality of parameters such as air flow rate, pressure, and temperature. The control system is further arranged to adjust operation of the dust extractor based on the detected parameters in order to maintain a safe operating state, e.g., to avoid overheating.

DE 2032476 A1 relates to a vacuum cleaner for domestic use. The vacuum cleaner has a compressor which speed is automatically adapted to the current work process that is being performed by the vacuum cleaner, i.e., if the vacuum cleaner is being used to clean a carpet or if the vacuum cleaner is being used to clean a curtain.

CN 103463920 A discloses the preamble of claims 1 and 13.

### SUMMARY

It is an object of the present disclosure to provide methods, control units, and heavy-duty dust extractors which alleviate the above-mentioned problems. This object is obtained by a method for controlling operation of a dust extractor. The method comprises obtaining sensor data related to an airflow into the dust extractor. The method also comprises determining if the dust extractor is operating in a high airflow operating range based on the sensor data, and, if the dust extractor is operating in the high airflow operating range, controlling a fan motor of the dust extractor to reduce the airflow to a reduced flow level at or above a pre-determined airflow level and below an obtainable flow level, wherein the pre-determined airflow level is associated with a dust extraction capability of the dust extractor.

Thus, as will be explained in the following, the motor is only used at maximum capacity when actually needed, and the dust extraction capability is maintained at a level sufficient for the dust extraction application at hand despite the reduced airflow. This reduces the motor peak power at start-up, which is an advantage. The more constant air flow simplifies cyclone or pre-filter optimization, which is an advantage. Also, somewhat surprisingly, more dust and debris is collected in the pre-separation step as a consequence of the disclosed method.

According to aspects, wherein the sensor data comprises any of: a pressure sensor value indicating an under-pressure or vacuum level associated with the airflow into the dust extractor, an air flow sensor value associated with the airflow into the dust extractor, an amount of electrical current drawn by the fan motor, and pressure data from a pitot pipe sensor arrangement configured to sense the airflow into the dust extractor. Thus, the herein disclosed arrangements and methods can be realized in many different ways, which is an advantage. The different sensors and sensor data types may be used separately or in combination for increased robustness.

There are also disclosed herein dust extractor and dust generator assemblies where a collaboration between dust extractor and dust generator allows or improved dust extraction. The dust generator is here arranged to provide information to the dust extractor about the present use case, and the dust extractor may thereby tailor dust extraction to the current operating scenario.

Suitable operating parameters for a given use case can be obtained from, e.g., wireless link to the dust generating equipment, from a remote server, or from an operator via manual data input means.

According to some such aspects, the high airflow operating range is defined in dependence of data obtained from dust creating equipment connected to the dust extractor.

According to other such aspects, the high airflow operating range is defined in dependence of data obtained from a remote server device.

According to further such aspects, the high airflow operating range is defined in dependence of data obtained from a manual input device.

According to aspects, determining if the dust extractor is operating in the high airflow operating range can be performed by, e.g., comparing an estimated present airflow level to an airflow value range, by comparing an estimated present under-pressure level to an under-pressure value range, or by a combination of the two.

There are also disclosed herein control units and dust extractors associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
- Figure 1: shows an example dust extractor;
- Figure 2: schematically illustrates a fan motor control arrangement;
- Figure 3: is a graph illustrating airflow vs under-pressure or vacuum level;
- Figure 4: schematically shows a dust extractor and dust generator assembly;
- Figure 5: is a flow chart illustrating methods;
- Figure 6: shows an example control unit; and
- Figure 7: schematically illustrates a computer program product.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

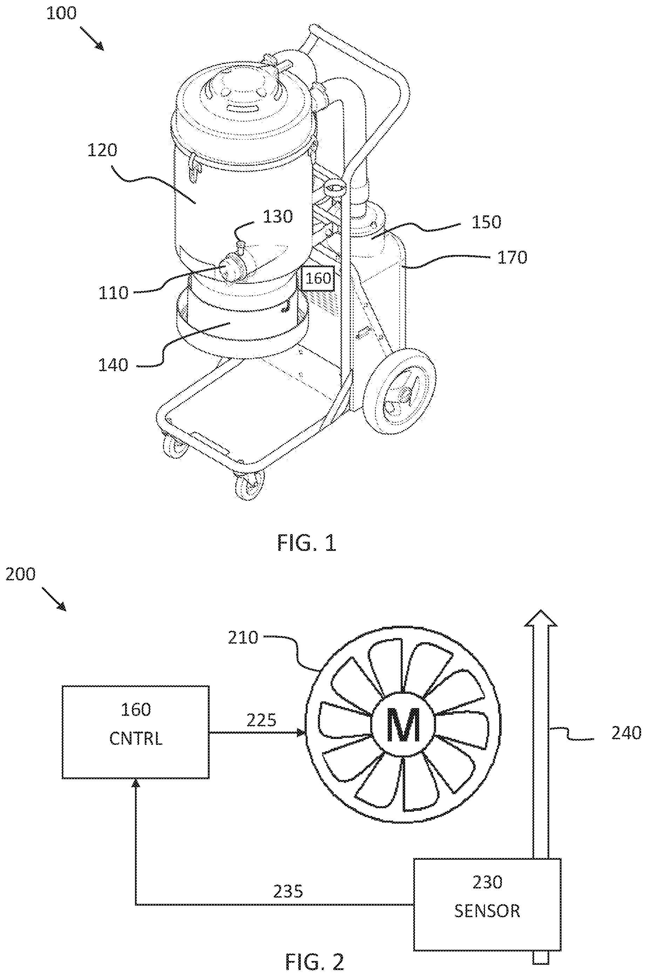

Figure 1 shows an example dust extraction device 100. The dust extraction device can be connected via a hose to a dust generator (not shown in Figure 1), such as a core drill, a floor grinder, a concrete saw, or the like. The hose is secured by means of an optional locking mechanism 130. The dust and slurry from the dust generator enters the dust extractor via an inlet 110. A pre-filter 120 is arranged after the inlet, i.e., downstream with respect to the airflow direction. The pre-filter 120 comprises a cyclone device for separating out larger debris particles from the particle-laden airflow entering the inlet 110. It is noted that the techniques disclosed herein can be applied to dust extraction devices with and without pre-filter units.

One or more air filters 150 are arranged downstream from the pre-filter 120. Such an air filter 150 may, e.g., be a High-Efficiency Particulate Air (HEPA) filter, but other air filters may also be used. HEPA, also known as high-efficiency particulate absorbing and high-efficiency particulate arrestance, is an efficiency standard of air filters. Filters meeting the HEPA standard must satisfy certain levels of efficiency. HEPA was commercialized in the 1950s, and the original term became a registered trademark and later a generic term for highly efficient filters. It is noted that the techniques disclosed herein can be applied to dust extraction devices with any number of air filters 150, including dust extraction devices comprising combinations of different air filters.

A fan and motor assembly is arranged in a compartment 170 downstream from the one or more air filters 150. The fan and motor arrangement generates a suction force which draws the particle-laden airflow in through the inlet 110, past the pre-filter 120, and through the one or more air filters 150. An upstream direction is a direction of the airflow towards the inlet, while a downstream direction is a direction away from the inlet.

The dust extractor 100 also comprises a control unit 160, schematically shown in Figure 1. The control unit 160 is configured to control various operations by the dust extractor such as activating the motor to drive the fan. This control unit will be discussed in more detail below.

Figure 2 schematically illustrates an example fan and motor assembly comprising the control unit 160. The control unit is configured to control 225 a fan motor 210 which draws the particle-laden airflow 240 into the dust extractor. A sensor device 230 is arranged in connection to the airflow 240 where it is configured to obtaining sensor data 235 related to the airflow, such as, e.g., a pressure level in kPa under atmospheric pressure (sometimes referred to as vacuum level) and/or an air flow level (often measured in m³/h).

The fan used in a vacuum device is sometimes referred to as an impeller. The terms fan and impeller will be used interchangeably herein. Vacuum devices comprising pre-filters 120 and air filters 150 are known in general and will not be discussed in more detail herein.

The present disclosure builds on the realization that, the more clogged the air filter 150 becomes, the higher the resistance encountered by the motor when drawing air through the air filter 150 becomes. However, the load on the fan motor 210 actually reduces as the resistance for drawing air through the air filter 150 increases. In other words, the harder it gets to draw air through the air filter 150, the easier it becomes for the motor to turn the fan. This is because, as the vacuum level increases downstream from the air filter 150, the fan blades rotate more easily due to the reduced air pressure. In fact, in complete vacuum, the fan blades would not encounter any friction or resistance from air whatsoever.

This means that a normal fan motor draws the most power when the air filter 150 is fresh and airflow is large, i.e., when the dust extractor is operating in a high airflow operating range where the least suction force is needed.

This also means that a normal fan motor draws the least amount of power when the air filter 150 is totally clogged, i.e., when the dust extractor is operating outside of the high airflow operating range where the most suction force is actually needed.

In light of this realization, it is proposed herein to detect when the dust extractor 100 is operating in the high airflow operating range and to reduce the airflow 240 when the dust extractor is operating in the high airflow operating range, i.e., when the air filter 160 is not overly clogged. This reduction in airflow will reduce requirements on motor starting current and allow for a more optimized overall operation of the dust extractor 100.

The sensor device 230 for obtaining the sensor data 235 related to the airflow 240 into the dust extractor 100 may, e.g., comprise a pressure sensor, such as a pitot pipe arrangement, to determine a level of under-pressure or a vacuum level associated with the airflow 240. An air flow sensor may also be used to determine a level of air flow, in terms of, e.g., m³/h, associated with the airflow 240 into the dust extractor 100. Sensor data 235 related to the airflow 240 into the dust extractor 100 may also be indirectly obtained from various correlated information sources, such as the amount of electrical current drawn by the fan motor 210. When the fan motor 210 operates under high load it draws more current than when the air filter gets clogged and the motor load decreases. In general, the higher the torque of the motor axle, the more current the motor draws.

The location of the sensor device 230 along the airflow 240 depends on the type of device. A pressure sensor arranged to determine a level of under-pressure is preferably arranged somewhere between the fan and the air filter 150, where the under-pressure builds. However, under-pressure can also be measured at other locations in the airflow 240. An airflow sensor can be arranged at various places along the airflow 240. A plurality of airflow sensors may provide more refined sensor data 235. A sensor arranged to determine the amount of current drawn by the motor is necessarily arranged in connection to a power supply of the motor.

Herein, an under-pressure value indicates how far below a reference pressure level, such as atmospheric pressure, the pressure in the airflow 240 is. Under-pressure is also sometimes referred to as vacuum level.

Airflow can be measured in a numbered of different ways. For instance, airflow can be measured in terms of the volume of air in m³ (at some reference pressure) which passes some point in the system per unit of time, such as an hour h.

The herein disclosed techniques are not dependent on the exact definition of any of under-pressure or airflow, the skilled person is able to adjust the disclosed methods to work with most definitions and reference values.

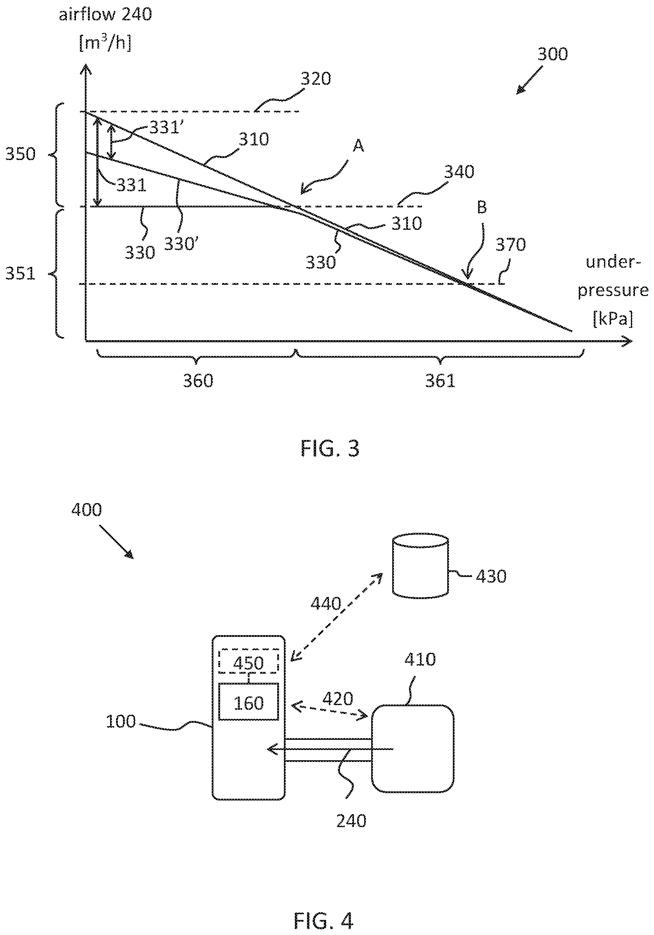

Figure 3 shows a graph of under-pressure (in kPa) vs airflow (in m³/h) that illustrates some of the proposed techniques. The airflow is the airflow 240 indicated in Figure 2. The pressure in kPa decreases to the right, and the airflow 240 increases upwards in the graph. An increased under-pressure means that the air pressure has dropped. A dust extractor 100 with a fresh unclogged air filter will be able to generate an airflow 240 in a high airflow value range 350 starting at a peak airflow level 320. The maximum obtainable flow level 310 then decreases as the air filter becomes more and more loaded with particulate matter, eventually entering a low airflow value range 351. As the airflow reduces, the underpressure increases from a low underpressure value range 360 to a high underpressure value range 361. This is because the resistance in sucking air through the air filter 150 increases which resistance builds the underpressure.

It is appreciated that a dust extractor can be associated with a high airflow operating range 350, 360, where airflow is relatively high and underpressure is relatively low.

Detecting if the dust extractor is operating in the high airflow operating range can be performed by comparing a current airflow to some threshold value or to a range of airflow values.

Detecting if the dust extractor is operating in the high airflow operating range can also be performed by comparing a current under-pressure to some threshold value or to a range of under-pressure values.

The dust extractors described herein are configured to reduce the airflow 240 to a reduced flow level 330, 330' below the obtainable flow level 310 by an amount 331, 331' when the dust extractor is operating in the high airflow operating range 350, 360, and to maintain airflow at or above a pre-determined airflow level 340. As noted above, when the air filter 150 is not overly laden with particulate matter, it is relatively easy to generate an airflow through the dust extractor system. The predetermined airflow level 340 is configured at a level where a sufficient suction power is generated. In other words, the pre-determined airflow level 340 is associated with a dust extraction capability of the dust extractor 100. Thus, the motor power can be reduced while maintaining a sufficient airflow for the application at hand.

It is appreciated that the airflow 240 can be reduced by an amount 331 down to a constant level, such as the pre-determined airflow level 340, or it can be reduced by some smaller amount 331' to an intermediate airflow level 330' between the obtainable flow level 310 and the pre-determined airflow level 340. Since the pre-determined airflow level 340 corresponds to an airflow which is sufficient for generating enough suction power for the dust extraction application at hand, dust extraction capability is maintained despite the reduction in air flow as long as the airflow is not reduced to a level too far below the pre-determined airflow level 340. The pre-determined airflow level may, for some example dust extractors, lie on the order 150-2000 m³/h, and preferably between 150-700 m³/h, although it is understood that these levels are application dependent and also machine dependent, and can be determined by practical experimentation or other forms of analysis, such as computer simulation.

Some known dust extractors, such as that disclosed in US 2013/0019901 for instance, comprise mechanisms for detecting a non-use condition and lowering air flow in response to detecting the non-use condition, in order to, e.g., save energy and reduce generated noise. This can for instance be advantageous in domestic use dust extractors comprising mouthpieces which are often lifted off the floor (a non-use condition), in which case no suction power is required. It is appreciated that the mechanisms disclosed herein are fundamentally different, since the airflow level is only reduced to a level at or above the pre-determined airflow level 340, which is configured for maintaining a sufficient airflow for the application at hand. In other words, the dust extraction capability of the dust extractor is maintained despite the lowering of airflow. Also, the lowering of the airflow is not done in response to detecting a non-use condition, since the dust extractor is still used, although with reduced airflow. When the air filter becomes more and more laden with particulate matter, it becomes harder and harder to maintain airflow at the pre-determined airflow level 340. At some point in time the reduced flow level 330, 330' comes close to the maximum obtainable flow level 310, indicated as point 'A' in Figure 3. When this happens the dust extractor 100 is no longer operating in the high airflow operating range 350, 360 where it is possible to reduce motor power and still provide enough airflow for the application at hand. When the dust extractor leaves the high airflow operating range 350, 360, the motor has to give all it has in order to provide sufficient airflow to meet requirements on the dust extraction task at hand.

The dust extractor 100 is also associated with an airflow level threshold 370, below which sufficient suction can no longer be delivered. At this operating point, indicated as point 'B' in Figure 3, the particle laden air filter 150 needs to be cleaned. This air filter cleaning may comprise briefly but forcefully pushing air backwards through the filter, servicing or cleaning the filter, or even replacing the air filter 150.

Figure 4 shows a dust extractor system 400 comprising the dust extractor 100 with the control unit 160. The dust extractor 100 is connected to dust creating equipment 410, e.g., via the inlet 110 shown in Figure 1. Most dust extractors can be connected to a wide variety of different dust generating equipment. Some types of equipment generate more dust than others, and even the same type of equipment may generate a variable amount of particle laden airflow 240 depending on how it is used. Also, some dust extraction tasks require a maximum of dust to be extracted and removed in a controlled manner, while other dust extraction tasks are performed in environments where it is merely desired to somewhat limit the amount of generated dust. It is therefore appreciated that the various operating levels of the dust extractor illustrated in Figure 3 may be configured in dependence of the current dust extraction operating scenario.

The dust extractor 100 may be connected to the dust generating equipment 410, via, e.g., cable or wireless link 420. The dust generating equipment can then inform the dust extractor device of, e.g., how much dust that can be expected. The dust generating equipment may also monitor the amount of dust generated in real time, e.g., using photodiode systems, and inform the dust extractor via the communication link 420 of the amount of generated dust. The high airflow operating range 350, 360 can then be defined in dependence of the data obtained from the dust creating equipment 410 connected to the dust extractor 100. Also, the reduced flow level 330 and the pre-determined airflow level 340 can be set based on the data obtained from the dust generating equipment.

A database can also be maintained on, e.g., a remote server 430 which can be accessed in order to set the different levels in dependence of the dust extractor operating scenario. This way the high airflow operating range can be defined in dependence of data obtained 440 from the remote server device 430. For instance, suppose the dust generating equipment identifies itself to the dust extractor by, e.g., a product code or the like. The dust extractor can then use the like 440 to the remote server to download suitable operating parameters, such as a setting for the pre-determined airflow level 340 and a setting for the airflow level threshold 370.

The dust extractor 100 may also comprise a manual input device 450, such as a display and touchscreen or keyboard, allowing an operator to define the pre-determined flow level 340 and/or the airflow level threshold 370. This way the high airflow operating range is defined in dependence of data obtained from the manual input device 450. An operator may, for instance, input which type of dust generating equipment 410 that is currently connected to the dust extractor 100. The dust extractor 100 may then access internal memory in order to configure operating parameters that are tailored for the connected dust generating equipment. In this way, the operation of the dust extractor can be optimized, and a more efficient dust extraction process obtained. The operator may also input a dust extraction level by the manual input device 450. This dust extraction level may, e.g., be on a scale from one to ten, indicating how much dust and debris that is to be collected. Some construction sites may be associated with larger requirements on dust collection than other. In this way, the operator can tailor the operation to the current construction site.

To summarize, Figure 4 shows a dust extractor system 400 where one or more communication links 420 440 are used to configure the operation of the dust extractor in dependence of the current operating scenario. This configuration may, e.g., comprise setting airflow levels such as the pre-determined airflow level 340 and/or the airflow level threshold 370. The configuration may be performed either via manual input from an operator via a manual input device 450, or automatically using a communication link between the dust extractor 100 and the dust generating equipment 410, and/or a communication link 440 between the dust extractor 100 and a remote server 440.

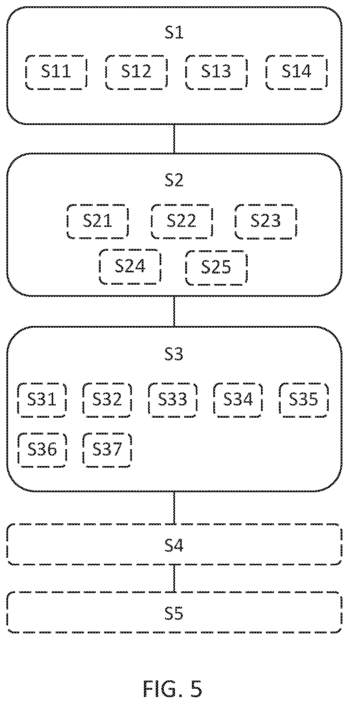

Figure 5 is a flow chart illustrating methods which summarize the example operations by the dust extractor 100 discussed above. Some aspects of the method are performed by the control unit 160, some aspects of the method are performed jointly with the dust generating equipment and/or the remote server 430 discussed above in connection to Figure 4.

Figure 5 shows a method for controlling operation of a dust extractor 100. The method comprises obtaining S1 sensor data 235 related to an airflow 240 into the dust extractor 100. The purpose of obtaining the sensor data related to the airflow is mainly to determine if and when the dust extractor is operating in the high airflow operating range, where airflow is higher than required to satisfy application requirements.

Various types of sensors or combination of sensor types may be used for this purpose. For instance, the sensor data 235 may comprise S11 a pressure sensor value indicating an under-pressure or vacuum level associated with the airflow 240 into the dust extractor 100. This reading indicates, e.g., the operating point along the x-axis or under-pressure axis in Figure 3. Thus, by monitoring airflow pressure, the control unit 160 may determine if the dust extractor 100 is operating in the low under-pressure value range 360 or not.

The sensor data 235 may also comprise S12 an air flow sensor value associated with the airflow 240 into the dust extractor 100. This sensor reading provides information related to the operating point along the y-axis in Figure 3, i.e., the airflow axis. Thus, by monitoring data from an airflow sensor, the control unit may determine if the dust extractor 100 is operating in the high airflow value range 350 or not.

The motor load my also indicate which operating range the dust extractor currently is in, i.e., if it is in the high airflow operating range or not. Thus, according to some aspects, the sensor data 235 comprises S13 an amount of electrical current drawn by the fan motor 210.

A pitot pipe or pitot tube arrangement may also be used to determine airflow pressure. Thus, according to some aspects, the sensor data 235 comprises S14 pressure data from a pitot pipe sensor arrangement configured to sense the airflow 240 into the dust extractor 100. A pitot tube or pipe, also known as pitot probe, is a flow measurement device used to measure fluid flow velocity. The basic pitot tube consists of a tube pointing directly into the fluid flow. As this tube contains fluid, a pressure can be measured; the moving fluid is brought to rest (stagnates) as there is no outlet to allow flow to continue. This pressure is the stagnation pressure of the fluid, also known as the total pressure or (particularly in aviation) the pitot pressure.

The method also comprises determining S2 if the dust extractor 100 is operating in a high airflow operating range 350, 360 based on the sensor data 235, and if the dust extractor 100 is operating in the high airflow operating range, controlling S3 a fan motor 210 of the dust extractor 100 to reduce the airflow 240 to a reduced flow level 330 below an obtainable flow level. Thus, if the dust extractor is generating more airflow than necessary to fulfil the dust extraction task, the motor power is reduced. This action of course saves energy, which is an advantage. However, the action of reducing airflow also improves the efficiency of the air filter, and allows for a more constant airflow, which in turn allows for an improved optimization of the overall dust extraction process.

As mentioned above, a number of different options can be used to determine if the dust extractor is operating on the high airflow operating range. For instance, the method may comprise determining S21 if the dust extractor 100 is operating in the high airflow operating range by comparing an estimated present airflow level to an airflow value range 350. According to other aspects, the method may comprise determining S22 if the dust extractor 100 is operating in the high airflow operating range by comparing an estimated under-pressure level to an under-pressure value range 360. Of course, several methods can be used jointly to determine when the dust extractor is operating on the high airflow operating range. It is also appreciated that this detection can be made by instead detection when the dust extractor is operating outside of the high airflow operating range.

Interestingly, the high airflow operating range can be defined S23 in dependence of data obtained from dust creating equipment 410 connected to the dust extractor 100. Thus, it is appreciated that the relative term 'high' here depends on the dust extraction application. Some dust extraction applications comprise extracting large amounts of heavy debris, which may require a relatively large airflow. In these cases, the high airflow regime may be small and close to the maximum obtainable airflow by the dust extractor. However, some other applications may require smaller amounts of airflow in order to extract enough dust and debris, and in these cases the high airflow regime may span over a larger range of airflow values 350 and/or over a larger range of under-pressure values 360. The dust generating equipment 410 may be arranged to provide information to the dust extractor indicating a set of requirements or requests for a given range or airflows or under-pressure values.

With reference to Figure 4, the method may comprise determining S4 a current operating scenario and controlling the fan motor 210 of the dust extractor 100 to obtain an airflow level in dependence of the operating scenario.

According to some aspects, the high airflow operating range may be defined S24 in dependence of data obtained from a remote server device 430. The remote server may, e.g., tabulate dust extractor settings corresponding to different use cases. The dust extractor may access the remote server, submit the current use case, and receive back data relating to suitable operating parameters such as the pre-determined airflow level 340, the airflow level threshold 370, and the like.

According to further aspects, the high airflow operating range is defined S25 in dependence of data obtained from a manual input device 450. The dust extractor 100 may of course also comprise means for manual configuration of the operating parameters discussed above. For instance, an operator may input the present use case in which the dust extractor is operated. I.e., which type of dust generating equipment that is connected to the extractor, what the requirements on dust extraction is, and so on. The control unit 160 may then process the manual input data into suitable operating parameters, such as the pre-determined airflow level 340, the airflow level threshold 370, and the like.

The controlling of the fan motor 210 in order to reduce airflow down to the pre-determined air-flow level 340 may be accomplished in a number of ways, which may be applied separately or in combination.

For instance, the method may comprise controlling S31 the fan motor 210 by reducing a supply voltage of the fan motor 210 to reduce the airflow 240 below the obtainable flow level. Reducing the supply voltage is a straight-forward method to reduce motor power, and thereby achieve the reduced airflow. Alternatively, or in combination, the method may also comprise controlling S32 the fan motor 210 by reducing an engine speed of the fan motor 210 to reduce the airflow 240 below the obtainable flow level.

The fan itself may also be used to adjust airflow and motor load. For instance, the method may comprise controlling S33 the fan motor 210 by adjusting a blade pitch of the fan driven by the fan motor 210 to reduce the airflow 240 below the obtainable flow level. Thus, when the dust extractor 100 is operating in the high airflow operating range, the airflow can be backed-off to a reduced level by adjusting blade pitch. This will alter the blade load and thus generate the desired effect of maintaining operation at the predetermined airflow level 340.

Similarly, to adjusting blade pitch, an automatic arrangement for controlling S34 the fan motor 210 by adjusting a distance between a fan blade tip and a fan housing of the fan driven by the fan motor 210 can be implemented. In such cases, the fan housing may be formed with a conical shape along an axial direction of the fan, and the fan can be moved up and down inside the housing, thereby adjusting a distance between a fan blade tip and a fan housing of the fan driven by the fan motor 210.

A further option comprises controlling S35 the fan motor 210 by restricting an air intake to the fan driven by the fan motor 210 to reduce the airflow 240 below the obtainable flow level. This restriction can be arranged prior to the pre-filter 120, i.e., upstream from the pre-filter 120, or downstream from the pre-filter 120. The restriction can also be arranged on either side of the one or more air filters 150.

According to aspects, the method also comprises controlling S36 the fan motor 210 of the dust extractor 100 to maintain operation at a pre-determined and constant airflow level 340 when the dust extractor 100 is operating in the high airflow operating range 350, 360. Thus, it is appreciated that the level 340 may be a constant level as shown in Figure 3. However, according to other aspects the level is not constant, but defined as a function of, e.g., airflow or under-pressure level. For instance, the pre-determined airflow level 340 may be configured with a slope, or may be any function of under-pressure level, such as a squared function of the like.

To give an example, the pre-determined airflow level 340 may be between 150-2000 m³/h, and preferably between 150-700 m³/h.

According to further aspects, controlling the fan motor 210 of the dust extractor 100 to reduce the airflow 240 comprises reducing S37 the airflow between 20-30% of a peak airflow level 320, and preferably by 25% of the peak airflow level.

The method may furthermore comprise triggering S5 an alarm, such as a low airflow alarm or a clogged filter alarm, in response to obtaining sensor data 235 indicating a current airflow level below an airflow level threshold 370. Thus, it is appreciated that the airflow sensors discussed above can be used for multiple purposes, such as controlling fan motor operation and detecting airflows below operating requirements.

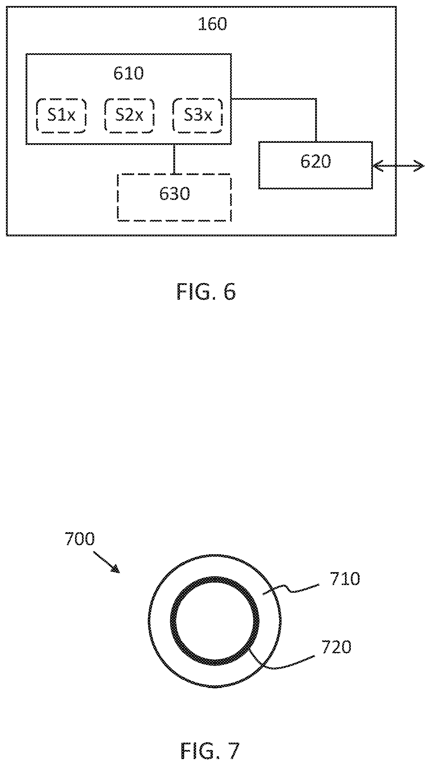

Figure 6 schematically illustrates, in terms of a number of functional units, the general components of a control unit 160. Processing circuitry 610 is provided using any combination of one or more of a suitable central processing unit CPU, multiprocessor, microcontroller, digital signal processor DSP, etc., capable of executing software instructions stored in a computer program product, e.g. in the form of a storage medium 630. The processing circuitry 610 may further be provided as at least one application specific integrated circuit ASIC, or field programmable gate array FPGA.

Particularly, the processing circuitry 610 is configured to cause the device 160 to perform a set of operations, or steps, such as the methods discussed in connection to Figure 5 and the discussions above. For example, the storage medium 630 may store the set of operations, and the processing circuitry 610 may be configured to retrieve the set of operations from the storage medium 630 to cause the device to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The device 160 may further comprise an interface 620 for communications with at least one external device. As such the interface 620 may comprise one or more transmitters and receivers, comprising analogue and digital components and a suitable number of ports for wireline or wireless communication.

The processing circuitry 610 controls the general operation of the control unit 160, e.g., by sending data and control signals to the interface 620 and the storage medium 630, by receiving data and reports from the interface 620, and by retrieving data and instructions from the storage medium 630.

To summarize, with reference also to Figures 1-3, Figure 6 schematically illustrates a control unit 160 for controlling operation of a dust extractor 100. The control unit comprises processing circuitry 610 configured to;
obtain S1x sensor data 235 related to an airflow 240 into the dust extractor 100,
determine S2x if the dust extractor 100 is operating in a high airflow operating range 350, 360 based on the sensor data 235, and
if the dust extractor (100) is operating in the high airflow operating range,
control S3x a fan motor 210 of the dust extractor 100 to reduce the airflow 240 below a maximum obtainable flow level 310.

The control unit 160 may, according to different aspects, also be arranged to perform the other methods steps discussed above in connection to Figure 5.

There has also been disclosed herein a dust extractor 100 arranged to perform the methods discussed above. The dust extractor for instance, comprises the control unit 160, and is therefore arranged to perform the different method steps discussed above.

According to aspects, the dust extractor 100 comprises one or more sensor devices 230 arranged to provide sensor data 235 related to the airflow 240. The sensor devices may, e.g., be communicatively coupled to the control unit 160, which may base control of the dust extractor 100 based on the sensor data 235. The sensor data 235 comprises a pressure sensor value indicating an under-pressure or vacuum level associated with the airflow 240 into the dust extractor 100.

According to aspects, the sensor data 235 provided by the one or more sensor devices 230 comprises an air flow sensor value associated with the airflow 240 into the dust extractor 100.

According to aspects, the sensor data 235 provided by the one or more sensor devices 230 comprises an amount of electrical current drawn by the fan motor 210. Electrical current drawn by an electrical motor can be measured in various known ways. The measurement device will therefore not be discussed in more detail herein.

According to aspects, the sensor data 235 provided by the one or more sensor devices 230 comprises pressure data from a pitot pipe sensor arrangement configured to sense the airflow 240 into the dust extractor 100. Pitot pipe sensor arrangement are also known.

The dust extractor 100 is optionally arranged to determine if the dust extractor 100 is operating in the high airflow operating range by comparing an estimated present airflow level to an airflow value or an airflow value range 350. This high airflow operating range was exemplified and discussed above, e.g., in connection to Figure 3.

The dust extractor 100 is optionally arranged to determine if the dust extractor 100 is operating in the high airflow operating range by comparing an estimated present under-pressure level to an under-pressure value or to an under-pressure value range 360. This high airflow operating range was exemplified and discussed above, e.g., in connection to Figure 3.

The high airflow operating range may be defined in dependence of data obtained from dust creating equipment 410 connected to the dust extractor 100. This feature provides many advantages, some of which were discussed in connection to Figure 4. The high airflow operating range may also, at least in part, be defined in dependence of data obtained from a remote server device 430, and/or in dependence of data obtained from a manual input device 450.

The dust extractor 100 may control the fan motor in different ways, some of which may also be used in combination. For example, the dust extractor may be arranged to control the fan motor 210 by reducing a supply voltage of the fan motor 210 to reduce the airflow 240 below the obtainable flow level. The dust extractor 100 may also be arranged to control the fan motor 210 by reducing an engine speed of the fan motor 210 to reduce the airflow 240 below the obtainable flow level. Other ways to control the fan motor comprises adjusting a blade pitch of the fan driven by the fan motor 210 to reduce the airflow 240 below the obtainable flow level, and also adjusting a distance between a fan blade tip and a fan housing of the fan driven by the fan motor 210. This fan housing may be formed with a conical shape along an axial direction of the fan. The fan motor 210 may furthermore be controlled by restricting an air intake to the fan driven by the fan motor 210 to reduce the airflow 240 below the obtainable flow level.

It is again appreciated that different combinations of the above-mentioned control methods for controlling the fan motor 210 can be used with advantage. For instance, the voltage may be controlled to fine-tune fan motor airflow, while the distance between fan blade tip and fan housing of the fan driven by the fan motor 210 can be adjusted in discrete steps to obtain large variations in airflow.

Some aspects of the disclosed dust extractor comprise a dust extractor arranged to control the fan motor 210 of the dust extractor 100 to maintain operation at a pre-determined and constant airflow level 340 when the dust extractor 100 is operating in the high airflow operating range 350, 360. Thus, the airflow is regulated towards a target airflow level. This pre-determined airflow level 340 may be between 150-2000 m³/h, and preferably 150-700 m³/h.

Other aspects of the disclosed dust extractor 100 comprises dust extractors arranged to determine a current operating scenario, and to control the fan motor 210 of the dust extractor 100 to obtain an airflow level in dependence of the operating scenario.

The dust extractor may furthermore be arranged to trigger an alarm in response to obtaining sensor data 235 indicating a current airflow level below an airflow level threshold 370.

Other components, as well as the related functionality, of the dust extractor and the control unit are omitted in order not to obscure the concepts presented herein.

Figure 7 illustrates a computer readable medium 710 carrying a computer program comprising program code means 720 for performing the methods illustrated in Figure 5, when said program product is run on a computer. The computer readable medium and the code means may together form a computer program product 700.

## Claims

1. A method for controlling operation of a heavy-duty dust extractor (100) arranged to be connected via a hose to a dust generator such as a core drill, a floor grinder, or a concrete saw, the heavy-duty dust extractor (100) comprising a pre-filter (120) with a cyclone device after an inlet (110), one or more air filters (150) downstream from the pre-filter (120), and a fan and motor assembly in a compartment (170) downstream from the one of more air filters (150), **characterised by** a control unit (160), the method further **characterised by**:
obtaining (S1) sensor data (235) related to an airflow (240) into the dust extractor (100),
determining (S2) if the dust extractor (100) is operating in a high airflow operating range (350, 360) based on the sensor data (235), and
if the dust extractor (100) is operating in the high airflow operating range, controlling (S3) a fan motor (210) of the dust extractor (100) to reduce the airflow (240) to a reduced flow level (330, 330') at or above a pre-determined airflow level (340) and below an obtainable flow level (310), wherein the pre-determined airflow level (340) is associated with a dust extraction capability of the dust extractor (100).

2. The method according to claim 1, wherein the sensor data (235) comprises (S11) a pressure sensor value indicating an under-pressure or vacuum level associated with the airflow (240) into the dust extractor (100), and/or the sensor data (235) comprises (S12) an air flow sensor value associated with the airflow (240) into the dust extractor (100).

3. The method according to any previous claim, wherein the sensor data (235) comprises (S13) an amount of electrical current drawn by the fan motor (210), and/or the sensor data (235) comprises (S14) pressure data from a pitot pipe sensor arrangement configured to sense the airflow (240) into the dust extractor (100).

4. The method according to any previous claim, comprising determining (S21) if the dust extractor (100) is operating in the high airflow operating range by comparing an estimated present airflow level to an airflow value or an airflow value range (350), and/or by comparing an estimated present under-pressure level to an under-pressure value or to an under-pressure value range (360).

5. The method according to any previous claim, wherein the high airflow operating range is defined (S23) in dependence of data obtained from dust creating equipment (410) connected to the dust extractor (100).

6. The method according to any previous claim, wherein the high airflow operating range is defined (S24) in dependence of data obtained from a remote server device (430), and/or in dependence of data obtained from a manual input device (450).

7. The method according to any previous claim, comprising controlling (S31) the fan motor (210) by reducing a supply voltage of the fan motor (210) to reduce the airflow (240) below the obtainable flow level, and/or by reducing an engine speed of the fan motor (210) to reduce the airflow (240) below the obtainable flow level.

8. The method according to any previous claim, comprising controlling (S35) the fan motor (210) by restricting an air intake to the fan driven by the fan motor (210) to reduce the airflow (240) below the obtainable flow level.

9. The method according to any previous claim, comprising controlling (S36) the fan motor (210) of the dust extractor (100) to maintain operation at a pre-determined and constant airflow level (340) when the dust extractor (100) is operating in the high airflow operating range (350, 360), preferably the pre-determined airflow level (340) is 150-2000 m³/h, and more preferably 150-700 m³/h.

10. The method according to any previous claim, wherein controlling the fan motor (210) of the dust extractor (100) to reduce the airflow (240) comprises reducing (S37) the airflow between 20-30% of a peak airflow level (320), and preferably by 25%.

11. The method according to any previous claim, comprising determining (S4) a current operating scenario, and controlling the fan motor (210) of the dust extractor (100) to obtain an airflow level in dependence of the operating scenario.

12. The method according to any previous claim, comprising triggering (S5) an alarm in response to obtaining sensor data (235) indicating a current airflow level below an airflow level threshold (370).

13. A heavy-duty dust extractor (100) arranged to be connected via a hose to a dust generator such as a core drill, a floor grinder, a concrete saw, or the like, the heavy-duty dust extractor (100) comprising a pre-filter (120) with a cyclone device after an inlet (110), one or more air filters (150) downstream from the pre-filter (120), a fan and motor assembly in a compartment (170) downstream from the one of more air filters (150), and **characterised by** a control unit (160) for
controlling operation of the dust extractor (100), the control unit (160) comprising processing circuitry (610) configured to;
obtain (S1x) sensor data (235) related to an airflow (240) into the dust extractor (100),
determine (S2x) if the dust extractor (100) is operating in a high airflow operating range (350, 360) based on the sensor data (235), and
if the dust extractor (100) is operating in the high airflow operating range, control (S3x) a fan motor (210) of the dust extractor (100) to reduce the airflow (240) to a reduced flow level (330, 330') at or above a pre-determined airflow level (340) and below an obtainable flow level (310), wherein the pre-determined airflow level (340) is associated with a dust extraction capability of the dust extractor (100).

14. A computer program (720) comprising program code means for performing the method of any of claims 1-12 when said program is run on processing circuitry (610) of the control unit (160) of the heavy-duty dust extractor (100) of claim 13.

## Patentansprüche

1. Verfahren zum Steuern eines Betriebs eines Hochleistungs-Staubabsaugers (100), der angeordnet ist, um über einen Schlauch mit einem Stauberzeuger wie einem Kernbohrer, einer Bodenschleifmaschine oder einer Betonsäge verbunden zu werden, der Hochleistungs-Staubabsauger (100) umfassend einen Vorfilter (120) mit einer Zyklonvorrichtung nach einem Einlass (110), einen oder mehrere Luftfilter (150) stromabwärts des Vorfilters (120) und eine Gebläse- und Motoranordnung in einer Kammer (170) stromabwärts des einen oder der mehreren Luftfilter (150), **gekennzeichnet durch** eine Steuereinheit (160), wobei das Verfahren ferner **gekennzeichnet ist durch**:
Erhalten (S1) von Sensordaten (235) bezogen auf einen Luftstrom (240) in den Staubabsauger (100),
Bestimmen (S2), ob der Staubabsauger (100) in einem Betriebsbereich (350, 360) mit hohem Luftstrom betrieben wird, basierend auf den Sensordaten (235), und
falls der Staubabsauger (100) in dem Betriebsbereich mit hohem Luftstrom betrieben wird,
Steuern (S3) eines Gebläsemotors (210) des Staubabsaugers (100), um den Luftstrom (240) auf ein reduziertes Strömungsniveau (330, 330') bei oder über einem vorbestimmten Luftstromniveau (340) und unter einem erreichbaren Strömungsniveau (310) zu reduzieren, wobei das vorbestimmte Luftstromniveau (340) einer Staubabsaugfähigkeit des Staubabsaugers (100) zugeordnet ist.

2. Verfahren nach Anspruch 1, wobei die Sensordaten (235) einen Drucksensorwert umfassen (S11), der ein Unterdruck- oder Vakuumniveau angibt, das dem Luftstrom (240) in den Staubabsauger (100) zugeordnet ist und/oder die Sensordaten (235) einen Luftstromsensorwert umfassen (S12), der dem Luftstrom (240) in den Staubabsauger (100) zugeordnet ist.

3. Verfahren nach einem vorstehenden Anspruch, wobei die Sensordaten (235) eine Menge von elektrischem Strom umfassen (S13), der durch den Gebläsemotor (210) aufgenommen wird und/oder die Sensordaten (235) Druckdaten von einer Pitotrohrsensoranordnung umfassen (S14), die konfiguriert ist, um den Luftstrom (240) in den Staubabsauger (100) zu erfassen.

4. Verfahren nach einem vorstehenden Anspruch, umfassend das Bestimmen (S21), ob der Staubabsauger (100) in dem Betriebsbereich mit hohem Luftstrom betrieben wird, durch ein Vergleichen eines geschätzten aktuellen Luftstromniveaus mit einem Luftstromwert oder einem Luftstromwertbereich (350) und/oder durch das Vergleichen eines geschätzten aktuellen Unterdruckniveaus mit einem Unterdruckwert oder mit einem Unterdruckwertbereich (360).

5. Verfahren nach einem vorstehenden Anspruch, wobei der Betriebsbereich mit hohem Luftstrom in Abhängigkeit von Daten definiert wird (S23), die von einem stauberzeugenden Gerät (410) erhalten werden, das mit dem Staubabsauger (100) verbunden ist.

6. Verfahren nach einem vorstehenden Anspruch, wobei der Betriebsbereich mit hohem Luftstrom in Abhängigkeit von Daten, die von einer entfernten Servervorrichtung (430) erhalten werden und/oder in Abhängigkeit von Daten, die von einer manuellen Eingabevorrichtung (450) erhalten werden, definiert wird (S24).

7. Verfahren nach einem der vorstehenden Ansprüche, umfassend das Steuern (S31) des Gebläsemotors (210) durch das Reduzieren einer Versorgungsspannung des Gebläsemotors (210), um den Luftstrom (240) unter das erreichbare Strömungsniveau zu reduzieren und/oder durch das Reduzieren einer Motordrehzahl des Gebläsemotors (210), um den Luftstrom (240) unter das erreichbare Strömungsniveau zu reduzieren.

8. Verfahren nach einem vorstehenden Anspruch, umfassend das Steuern (S35) des Gebläsemotors (210) durch ein Begrenzen eines Lufteinlasses zu dem Gebläse, das durch den Gebläsemotor (210) angetrieben wird, um den Luftstrom (240) unter das erreichbare Strömungsniveau zu reduzieren.

9. Verfahren nach einem vorstehenden Anspruch, umfassend das Steuern (S36) des Gebläsemotors (210) des Staubabsaugers (100), um den Betrieb auf einem vorbestimmten und konstanten Luftstromniveau (340) aufrechtzuerhalten, wenn der Staubabsauger (100) in dem Betriebsbereich (350, 360) mit hohem Luftstrom betrieben wird, wobei vorzugsweise das vorbestimmte Luftstromniveau (340) 150-2000 m³/h beträgt, und mehr bevorzugt 150-700 m³/h.

10. Verfahren nach einem vorstehenden Anspruch, wobei das Steuern des Gebläsemotors (210) des Staubabsaugers (100), um den Luftstrom (240) zu reduzieren, das Reduzieren (S37) des Luftstroms zwischen 20-30 % eines Spitzenluftstromniveaus (320) umfasst, und vorzugsweise um 25 %.

11. Verfahren nach einem der vorstehenden Ansprüche, umfassend das Bestimmen (S4) eines aktuellen Betriebsszenarios und das Steuern des Gebläsemotors (210) des Staubabsaugers (100), um ein Luftstromniveau in Abhängigkeit von dem Betriebsszenario zu erhalten.

12. Verfahren nach einem der vorstehenden Ansprüche, umfassend ein Auslösen (S5) eines Alarms als Reaktion auf das Erhalten von Sensordaten (235), die ein aktuelles Luftstromniveau unter einer Luftstromniveauschwelle (370) angeben.

13. Hochleistungs-Staubabsauger (100), der angeordnet ist, um über einen Schlauch mit einem Stauberzeuger wie einem Kernbohrer, einer Bodenschleifmaschine, einer Betonsäge oder dergleichen verbunden zu werden, der Hochleistungs-Staubabsauger (100) umfassend einen Vorfilter (120) mit einer Zyklonvorrichtung nach einem Einlass (110), einen oder mehrere Luftfilter (150) stromabwärts des Vorfilters (120), eine Gebläse- und Motoranordnung in einer Kammer (170) stromabwärts des einen oder den mehreren Luftfilter (150), und **gekennzeichnet durch** eine Steuereinheit (160) zum Steuern des Betriebs des Staubabsaugers (100), die Steuereinheit (160) umfassend ein Verarbeitungsschaltung (610), die konfiguriert ist zum;
Erhalten (S1x) von Sensordaten (235) bezogen auf einen Luftstrom (240) in den Staubabsauger (100),
Bestimmen (S2x), ob der Staubabsauger (100) basierend auf den Sensordaten (235) in einem Betriebsbereich (350, 360) mit hohem Luftstrom betrieben wird, und
falls der Staubabsauger (100) in dem Betriebsbereich mit hohem Luftstrom betrieben wird,
Steuern (S3x) eines Gebläsemotors (210) des Staubabsaugers (100), um den Luftstrom (240) auf ein reduziertes Strömungsniveau (330, 330') bei oder über einem vorbestimmten Luftstromniveau (340) und unter einem erreichbaren Strömungsniveau (310) zu reduzieren, wobei das vorbestimmte Luftstromniveau (340) einer Staubabsaugfähigkeit des Staubabsaugers (100) zugeordnet ist.

14. Computerprogramm (720), umfassend Programmcodemittel zum Durchführen des Verfahrens nach einem der Ansprüche 1 bis 12, wenn das Programm auf der Verarbeitungsschaltung (610) der Steuereinheit (160) des Hochleistungs-Staubabsaugers (100) nach Anspruch 13 ausgeführt wird.

## Revendications

1. Procédé de commande de fonctionnement d'un extracteur de poussière à usage intensif (100) agencé pour être raccordé par le biais d'un tuyau à un générateur de poussière tel qu'une carotteuse, une ponceuse de sol, ou une scie à béton, l'extracteur de poussière à usage intensif (100) comprenant un préfiltre (120) avec un dispositif cyclone après une entrée (110), un ou plusieurs filtres à air (150) en aval du préfiltre (120), et un ensemble ventilateur et moteur dans un compartiment (170) en aval du ou des filtres à air (150), **caractérisé par** une unité de commande (160), le procédé étant en outre **caractérisé par** :
l'obtention (S1) de données de capteur (235) relatives à un flux d'air (240) dans l'extracteur de poussière (100),
la détermination (S2) du fait que l'extracteur de poussière (100) fonctionne dans une plage de fonctionnement à flux d'air élevé (350, 360) en fonction des données de capteur (235), et
que l'extracteur de poussière (100) fonctionne dans la plage de fonctionnement à flux d'air élevé,
la commande (S3) d'un moteur de ventilateur (210) de l'extracteur de poussière (100) pour réduire le flux d'air (240) à un niveau de flux réduit (330, 330') supérieur ou égal à un niveau de flux d'air prédéterminé (340) et inférieur à un niveau de flux pouvant être obtenu (310), dans lequel le niveau de flux d'air prédéterminé (340) est associé à une capacité d'extraction de poussière de l'extracteur de poussière (100).

2. Procédé selon la revendication 1, dans lequel les données de capteur (235) comprennent (S11) une valeur de capteur de pression indiquant un niveau de sous-pression ou de vide associé au flux d'air (240) dans l'extracteur de poussière (100), et/ou les données de capteur (235) comprennent (S12) une valeur de capteur de flux d'air associée au flux d'air (240) dans l'extracteur de poussière (100).

3. Procédé selon l'une quelconque revendication précédente, dans lequel les données de capteur (235) comprennent (S13) une quantité de courant électrique consommé par le moteur de ventilateur (210), et/ou les données de capteur (235) comprennent (S14) des données de pression provenant d'un agencement de capteur à tube de Pitot configuré pour détecter le flux d'air (240) dans l'extracteur de poussière (100).

4. Procédé selon l'une quelconque revendication précédente, comprenant la détermination (S21) du fait que l'extracteur de poussière (100) fonctionne dans la plage de fonctionnement à flux d'air élevé en comparant un niveau de flux d'air actuel estimé à une valeur de flux d'air ou à une plage de valeurs de flux d'air (350), et/ou en comparant un niveau de sous-pression actuel estimé à une valeur de sous-pression ou à une plage de valeurs de sous-pression (360).

5. Procédé selon l'une quelconque revendication précédente, dans lequel la plage de fonctionnement à flux d'air élevé est définie (S23) selon des données obtenues à partir d'un équipement créateur de poussière (410) raccordé à l'extracteur de poussière (100).

6. Procédé selon l'une quelconque revendication précédente, dans lequel la plage de fonctionnement à flux d'air élevé est définie (S24) selon des données obtenues d'un dispositif de serveur distant (430), et/ou selon des données obtenues d'un dispositif d'entrée manuelle (450).

7. Procédé selon l'une quelconque revendication précédente, comprenant la commande (S31) du moteur de ventilateur (210) en réduisant une tension d'alimentation du moteur de ventilateur (210) pour réduire le flux d'air (240) en dessous du niveau de flux pouvant être obtenu, et/ou en réduisant une vitesse de moteur du moteur de ventilateur (210) pour réduire le flux d'air (240) en dessous du niveau de flux pouvant être obtenu.

8. Procédé selon l'une quelconque revendication précédente, comprenant la commande (S35) du moteur de ventilateur (210) en restreignant une admission d'air vers le ventilateur entraîné par le moteur de ventilateur (210) pour réduire le flux d'air (240) en dessous du niveau de flux pouvant être obtenu.

9. Procédé selon l'une quelconque revendication précédente, comprenant la commande (S36) du moteur de ventilateur (210) de l'extracteur de poussière (100) pour maintenir le fonctionnement à un niveau de flux d'air prédéterminé et constant (340) lorsque l'extracteur de poussière (100) fonctionne dans la plage de fonctionnement à flux d'air élevé (350, 360), de préférence le niveau de flux d'air prédéterminé (340) est de 150 à 2 000 m³/h, et plus préférablement de 150 à 700 m³/h.

10. Procédé selon l'une quelconque revendication précédente, dans lequel la commande du moteur de ventilateur (210) de l'extracteur de poussière (100) pour réduire le flux d'air (240) comprend la réduction (S37) du flux d'air entre 20 et 30 % d'un niveau de flux d'air maximal (320), et de préférence de 25 %.

11. Procédé selon l'une quelconque revendication précédente, comprenant la détermination (S4) d'un scénario de fonctionnement actuel, et la commande du moteur de ventilateur (210) de l'extracteur de poussière (100) pour obtenir un niveau de flux d'air selon le scénario de fonctionnement.

12. Procédé selon l'une quelconque revendication précédente, comprenant le déclenchement (S5) d'une alarme en réponse à l'obtention de données de capteur (235) indiquant un niveau de flux d'air actuel inférieur à un seuil de niveau de flux d'air (370).

13. Extracteur de poussière à usage intensif (100) agencé pour être raccordé par le biais d'un tuyau à un générateur de poussière tel qu'une carotteuse, une ponceuse de sol, une scie à béton ou similaire, l'extracteur de poussière à usage intensif (100) comprenant un préfiltre (120) avec un dispositif cyclone après une entrée (110), un ou plusieurs filtres à air (150) en aval du préfiltre (120), un ensemble ventilateur et moteur dans un compartiment (170) en aval du ou des filtres à air (150), et **caractérisé par** une unité de commande (160) permettant de commander le fonctionnement de l'extracteur de poussière (100), l'unité de commande (160) comprenant une circuiterie de traitement (610) configurée pour ;
obtenir (S1x) des données de capteur (235) relatives à un flux d'air (240) dans l'extracteur de poussière (100),
déterminer (S2x) si l'extracteur de poussière (100) fonctionne dans une plage de fonctionnement à flux d'air élevé (350, 360) en fonction des données de capteur (235), et
si l'extracteur de poussière (100) fonctionne dans la plage de fonctionnement à flux d'air élevé,
commander (S3x) un moteur de ventilateur (210) de l'extracteur de poussière (100) pour réduire le flux d'air (240) à un niveau de flux réduit (330, 330') supérieur ou égal à un niveau de flux d'air prédéterminé (340) et inférieur à un niveau de flux pouvant être obtenu (310), dans lequel le niveau de flux d'air prédéterminé (340) est associé à une capacité d'extraction de poussière de l'extracteur de poussière (100).

14. Programme informatique (720) comprenant des moyens de code de programme permettant de mettre en œuvre le procédé selon l'une quelconque des revendications 1 à 12 lorsque ledit programme est exécuté sur une circuiterie de traitement (610) de l'unité de commande (160) de l'extracteur de poussière à usage intensif (100) selon la revendication 13.
